# EUROPEAN PATENT APPLICATION

(11) **EP 3 057 270 A1**
(43) Date of publication of application: **17.08.2016**
(21) Application number: 16150936.9
(22) Date of filing: 12.01.2016
(51) Int. Cl.: H04L 12/743

(54) **TECHNOLOGIES FOR MODULAR FORWARDING TABLE SCALABILITY**

(30) Priority: 12.02.2015 US 201562115517 P; 25.06.2015 US 201514750918
(71) Applicant: Intel Corporation, Santa Clara, CA 95054 (US)
(72) Inventor: WANG, Ren, Portland, OR Oregon 97229 (US); ZHOU, Dong, Pittsburgh, PA Pennsylvania 15213 (US); MACIOCCO, Christian, Portland, OR Oregon 97229 (US); GOBRIEL, Sameh, Hillsboro, OR Oregon 97124 (US); TAI, Tsung-Yuan C., Portland, OR Oregon 97229 (US)
(74) Representative: Rummler, Felix

(57) **Abstract**

Technologies for modular forwarding table scalability of a software cluster switch includes a plurality of computing nodes. Each of the plurality of computing nodes includes a global partition table (GPT) to determine an egress computing node for a network packet received at an ingress computing node of the software cluster switch based on a flow identifier of the network packet. The GPT includes a set mapping index that corresponds to a result of a hash function applied to the flow identifier and a hash function index that identifies a hash function of a hash function family whose output results in a node identifier that corresponds to the egress computing node to which the ingress computing node forwards the network packet. Other embodiments are described herein and claimed.

## Description

### CROSS-REFERENCE TO RELATED APPLICATION

The present application claims priority under 35 U.S.C. § 119(e) to U.S. Provisional Patent Application Serial No. 62/115,517, entitled "TECHNOLOGIES FOR MODULAR FORWARDING TABLE SCALABILITY," which was filed on February 12, 2015.

### BACKGROUND

Modem computing devices are capable of communicating (i.e., transmitting and receiving data communications) with other computing devices over various data networks, such as the Internet. To facilitate the communications between such computing devices, the networks typically include one or more network devices (e.g., a network switch, a network router, etc.) to route the communications (i.e., network packets) from one computing device to another based on network flows. Traditionally, network packet processing has been performed on dedicated network processors of the network devices. However, advancements in network virtualization technologies (e.g., network functions virtualization (NFV)) and centralized controller networking architectures (e.g., software-defined networking (SDN)) have resulted in network infrastructures that are highly scalable and rapidly deployable.

In one such network packet processing example, a cluster of interconnected server nodes can be used for network packet routing and switching. In a server node cluster, each server node may receive network packets from one or more external ports and dispatch the received network packets to the other server nodes for forwarding to a destination or egress ports based on identification rules of the network flow. To route the network traffic through the server node cluster, the server nodes generally use a routing table (i.e., routing information base (RIB)) and a forwarding table (i.e., forwarding information base (FIB)).

As each server node is added to the cluster, not only does the forwarding capacity of the cluster increase, but so does the number of destination addresses it can reach. In other words, as the size of the infrastructure of the network is scaled up, the size of each of the routing table and the forwarding table also increases, and can become very large. Typically, larger routing tables require more time and computing resources (e.g., memory, storage, processing cycles, etc.) to perform lookups on the forwarding table. Additionally, adverse effects of such scaling may include additional hops (i.e., each passing of the network packet between server nodes) required to process the network packet, or lookups being performed across the cluster's internal switch fabric, for example. Such adverse effects may result in decreased throughput and/or a forwarding table size that exceeds a forwarding table capacity.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified block diagram of at least one embodiment of a system for modular forwarding table scalability by a software cluster switch that includes a number of computing nodes;
FIG. 2 is a simplified block diagram of at least one embodiment of a computing node of the software cluster switch of the system of FIG. 1;
FIG. 3 is a simplified block diagram of at least one embodiment of an environment of the computing node of FIG. 2;
FIGS. 4 and 5 is a simplified flow diagram of at least one embodiment of a method for determining an egress computing node for a received network packet that may be executed by the computing node of FIG. 2;
FIG. 6 is a simplified flow diagram of at least one embodiment of a method for forwarding a network packet received from an ingress node that may be executed by the computing node of FIG. 2; and
FIG. 7 is a simplified flow diagram of at least one embodiment of a method for adding an entry corresponding to a network flow identifier of a network packet to a routing table that may be executed by the computing node of FIG. 2.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, it should be appreciated that items included in a list in the form of "at least one of A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on one or more transitory or non-transitory machine-readable (e.g., computer-readable) storage media, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

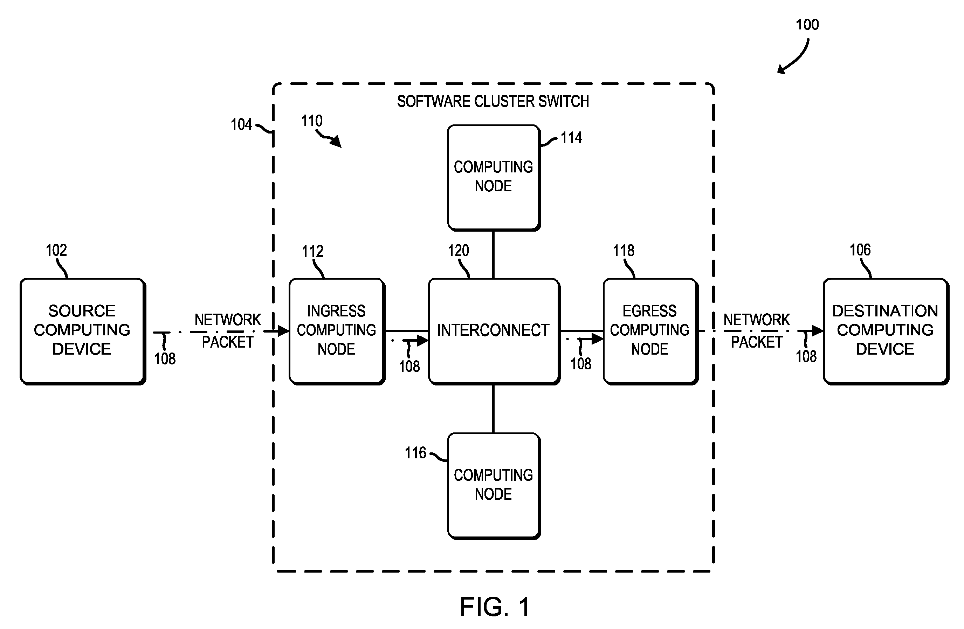

Referring now to FIG. 1, in an illustrative embodiment, a system 100 for modular forwarding table scalability includes a software cluster switch 104 in network communication with a source computing device 102 and a destination computing device 106. The software cluster switch 104 may serve as a standalone software switch/router or an underline fabric for distributed services in the scope of a network functions virtualization (NFV) and/or a software-defined networking (SDN) architecture, such as in a virtual evolved packet core (vEPC) model. The illustrative software cluster switch 104 includes a plurality of computing nodes 110, wherein each computing node 110 is capable of acting as both an ingress and egress computing node. While the illustrative system 100 includes the source computing device 102 and the destination computing device 106, it should be appreciated that each of the computing nodes 110 may be communicatively coupled to any number of different networks and/or subnetworks, network devices, and/or other software cluster switches. As such, any of the computing nodes 110 may receive network packets originating from one network and, based on a routing table of the software cluster switch 104, may forward the network packets to a different network.

The illustrative software cluster switch 104 includes an "ingress" computing node 112, a computing node 114, a computing node 116, and an "egress" computing node 118. Of course, in some embodiments, the software cluster switch 104 may also include additional computing nodes 110 as necessary to support network packet throughput. In use, the ingress computing node 112 of the software cluster switch 104 receives a network packet 108 from the source computing device 102 (e.g., a network switch, a network router, an originating computing device, etc.) in wired or wireless network communication with the software cluster switch 104. It should be appreciated that any of the other computing nodes 110 illustratively shown in FIG. 1 may instead receive the network packet 108 from the source computing device 102. As such, the particular computing node 110 receiving the network packet 108 may be designated as the "ingress" computing node 112 and is referred to as such in the following description.

Upon receipt of the network packet 108, the ingress computing node 112 performs a lookup on a forwarding table (i.e., a forwarding information base) to identify an egress computing node 118 (i.e., a handling node) responsible for processing the network packet 108 within the software cluster switch 104 based on a flow identifier (e.g., a media access code (MAC) address of a target computing device, an internet protocol (IP) address of a target computing device, a 5-tuple flow identifier, etc.) corresponding to the network packet 108 and then forwards the network packet 108 directly to that node via an interconnect device 120, or switch. To do so, each of the computing nodes 110 includes a routing table that stores information that maps the flow identifier to output ports of each of the computing nodes 110. From the routing table, two structures may be generated: (1) a global lookup table, or Global Partitioning Table (GPT), and (2) forwarding table entries. As will be described in further detail, the GPT is configured to be smaller (i.e., more compact) than the routing table and, as such, may be replicated to each of the computing nodes 110.

Unlike traditional software cluster switches, wherein each computing node includes a forwarding table that contains all of the forwarding table entries replicated in their entirety, the presently described forwarding table is partitioned and allocated across each of the computing nodes 110 such that none of the computing nodes 110 includes the entire forwarding table. In other words, the partitioned portions of the entire forwarding table are distributed across the computing nodes 110 of the software cluster switch 104 based on which computing node 110 is responsible for handling the forwarding of the associated network packet (i.e., the egress computing nodes responsible for transmitting the network packet) via the output ports of that computing node 110. Accordingly, each computing node 110 may be responsible for looking up a different portion of the forwarding table entries (i.e., a subset of the entire forwarding table) based on the routing table and the output ports of each computing node 110. As a result, the software cluster switch 104 can manage the transfer of the network packet 108 directly to the correct handling node in a single hop. Additionally, less memory (i.e., overhead) may be required using the GPT and partitioned forwarding table entries than in the traditional software cluster switch, wherein the memory at each computing node increases linearly with the number of computing nodes in the traditional software cluster switch.

The source computing device 102, and similarly, the destination computing device 106, may be embodied as any type of computation or computing device capable of performing the functions described herein, including, without limitation, a compute device, a smartphone, a desktop computer, a workstation, a laptop computer, a notebook computer, a tablet computer, a mobile computing device, a wearable computing device, a network appliance, a web appliance, a distributed computing system, a processor-based system, a multiprocessor system, a server (e.g., stand-alone, rack-mounted, blade, etc.), a network appliance (e.g., physical or virtual), and/or any type of compute and/or store device.

The software cluster switch 104 may be embodied as a group of individual computing nodes 110 acting in concert to perform the functions described herein, such as a cluster software router, a cluster software switch, a distributed software switch, a distributed software router, a switched fabric for distributed services, etc. In some embodiments, the software cluster switch 104 may include multiple computing nodes 110 communicatively coupled to each other according to a fully connected mesh networking topology. Of course, it should be appreciated that each computing node 110 may be communicatively coupled to the other computing nodes 110 according to any networking topology. For example, each computing node 110 may be communicatively coupled to the other computing nodes 110 according to, among other topologies, a switched network topology, a Clos network topology, a bus network topology, a star network topology, a ring network topology, a mesh topology, a butterfly-like topology, and/or any combination thereof.

Each of the computing nodes 110 of the software cluster switch 104 may be configured to perform any portion of the routing operations (e.g., ingress operations, forwarding operations, egress operations, etc.) for the software cluster switch 104. In other words, each computing node 110 may be configured to perform as the computing node that receives the network packet 108 from the source computing device 102 (e.g., the ingress computing node 112) and the computing node determined for performing a lookup and transmitting the network packet 108 out of the software cluster switch 104 (e.g., the egress computing node 118).

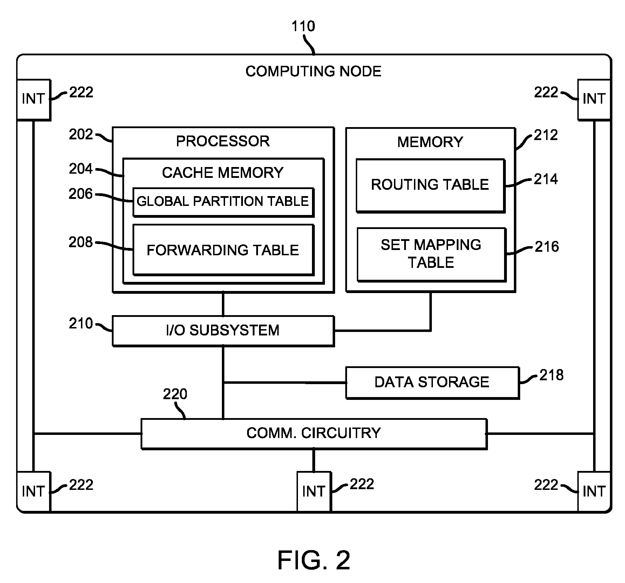

The computing nodes 110 may be embodied as, or otherwise include, any type of computing device capable of performing the functions described herein including, but not limited to a server computer, a networking device, a rack computing architecture component, a desktop computer, a laptop computing device, a smart appliance, a consumer electronic device, a mobile computing device, a mobile phone, a smart phone, a tablet computing device, a personal digital assistant, a wearable computing device, and/or other type of computing device. As illustratively shown in FIG. 2, the computing node 110 includes a processor 202, an input/output (I/O) subsystem 210, a memory 212, a data storage 218, communication circuitry 220, and a number of communication interfaces 222. Of course, in other embodiments, the computing node 110 may include additional or alternative components, such as those commonly found in a network computing device. Additionally, in some embodiments, one or more of the illustrative components may be incorporated in, or otherwise form a portion of, another component. For example, the memory 212, or portions thereof, may be incorporated in the processor 202 in some embodiments.

The processor 202 may be embodied as any type of processor capable of performing the functions described herein. For example, in some embodiments, the processor 202 may be embodied as a single core processor, a multi-core processor, digital signal processor, microcontroller, or other processor or processing/controlling circuit. The processor 202 may include a cache memory 204, which may be embodied as any type of cache memory that the processor 202 can access more quickly than the memory 212 for storing instructions and/or data for execution, such as an on-die cache. In some embodiments, the cache memory 204 may also store a global partitioning table (GPT) 206 and a forwarding table 208.

As described above, the GPT 206 is generally more compact than a fully-replicable forwarding table, which may allow the GPT 206 to be replicated and stored within the cache memory 204 at each of the computing nodes 110 during operation of the computing nodes 110. As will be described in further detail below, in some embodiments, the GPT 206 may be implemented using a set separation mapping strategy, which maps an input key to a handling node of the computing nodes 110 (e.g., the egress computing node 118). The set separation mapping strategy comprises developing a high-level index structure consisting of smaller groups, or subsets, of the entire set of input keys. Each input key may be derived from a flow identifier (e.g., a destination IP address, a destination MAC address, a 5-tuple flow identifier, etc.) that corresponds to the network packet 108.

As described above, the forwarding table 208 may include forwarding table entries that map input keys to the handling nodes and, in some embodiments, may include additional information. Each forwarding table 208 of the computing nodes 110 may store a different set (e.g., a portion, subset, etc.) of forwarding table entries obtained from a routing table 214. As such, the forwarding table 208 at each computing node 110 is smaller in size (e.g., includes less routing table entries) than the routing table 214, which typically includes all of the routing table entries of the software cluster switch 104. At the control plane of the software cluster switch 104, the forwarding table 208 may be embodied as a hash table. However, in some embodiments, the forwarding table 208 may be structured or embodied as a collection or group of the individual network routing entries loaded into the cache memory 204 for subsequent retrieval.

The memory 212 may be embodied as any type of volatile or non-volatile memory or data storage capable of performing the functions described herein. In operation, the memory 212 may store various data and software used during operation of the computing node 110 such as operating systems, applications, programs, libraries, and drivers. The memory 212 is communicatively coupled to the processor 202 via the I/O subsystem 210, which may be embodied as circuitry and/or components to facilitate input/output operations with the processor 202, the memory 212, and other components of the computing node 110. For example, the I/O subsystem 210 may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 210 may form a portion of a system-on-a-chip (SoC) and be incorporated, along with the processor 202, the memory 212, and other components of the computing node 110, on a single integrated circuit chip. It should be appreciated that although the cache memory 204 is described above as an on-die cache, or an on-processor cache, in such an embodiment, the cache memory 204 may be an off-die cache, but reside on the same SoC as the processor 202.

A copy of the routing table 214 (i.e., a global routing table) of the software cluster switch 104 may be stored in the memory 212 of each computing node 110. The routing table 214 includes a plurality of routing table entries, each having information that corresponds to a different network destination (e.g., a network address, a destination network or subnet, a remote computing device etc.). For example, in some embodiments, each routing table entry may include information indicative of a destination IP address (i.e., an IP address of a target computing device and/or a destination subnet), a gateway IP address corresponding to another computing node 110 through which network packets for the destination IP address should be sent, and/or an egress interface of the computing node 110 through which the network packets for the destination IP address are sent to the gateway IP address. It should be appreciated that the routing table 214 may include any other type of information to facilitate routing a network packet to its final destination.

In some embodiments, all or a portion of the network routing table entries may be obtained from the routing table 214 and used to generate or update the GPT 206 and the entries of the forwarding table 208. For example, an update to the routing table 214 may be received at a computing node 110, from which the computing node 110 may then generate or update (i.e., add, delete, or modify) the entries of the forwarding table 208 and the GPT 206. The updated forwarding table entry may then be transmitted to the appropriate handling node, which the handling node may use to update the forwarding table 208 local to that handling node. Additionally, in some embodiments, the computing node 110 that received the update to the routing table 214 may broadcast an update indication to all the other computing nodes 110 to update their respective GPTs.

As described previously, the forwarding table 208 may be embodied as a hash table. Accordingly, the control plane of the software cluster switch 104 may support necessary operations, such as hash table construction and forwarding table entry adding, deleting, and updating. It should be appreciated that although the GPT 206 and the forwarding table 208 are described as being stored in the cache memory 204 of the illustrative computing node 110, either or both of the GPT 206 and the forwarding table 208 may be stored in other data storage devices (e.g., the memory 212 and/or the data storage 218) of the computing nodes 110, in other embodiments. For example, in embodiments wherein the size of a forwarding table 208 for a particular computing node 110 exceeds the amount of storage available in the cache memory 204, at least a portion of the forwarding table 208 may instead be stored in the memory 212 of the computing node 110. In some embodiments, the size of the GPT 206 may be based on the available cache memory 204. In such embodiments, additional computing nodes 110 may be added to the software cluster switch 104 to ensure the size of the GPT 206 does not exceed the available cache memory 204 space.

The set mapping table 216 may be embodied as a hash table. Accordingly, the control plane of the software cluster switch 104 may support necessary operations, such as hash table construction and forwarding table entry adding, deleting, and updating. As such, when the set mapping table 216 deletes, generates, or updates a table entry locally, a message may be transmitted to the other computing nodes 110 in the software cluster switch 104 to provide an indication of the deleted, generated, or otherwise updated table entry to appropriately delete, generate, or update a corresponding table entry in the GPT 206 and/or forwarding table 208.

The data storage 218 may be embodied as any type of device or devices configured for short-term or long-term storage of data such as, for example, memory devices and circuits, memory cards, hard disk drives, solid-state drives, or other data storage devices. For example, the data storage 218 may be configured to store one or more operating systems to be initialized and/or executed by the computing node 110. In some embodiments, portions of the operating system(s) may be copied to the memory 212 during operations for faster processing and/or any other reason.

The communication circuitry 220 of the computing node 110 may be embodied as any type of communication circuit, device, or collection thereof, capable of enabling communications between the computing node 110, the source computing device 102, the destination computing device 104, the interconnect device 120, and/or other computing or networking devices via one or more communication networks (e.g., local area networks, personal area networks, wide area networks, cellular networks, a global network such as the Internet, etc.). The communication circuitry 220 may be configured to use any one or more communication technologies (e.g., wireless or wired communications) and associated protocols (e.g., Ethernet, Wi-Fi®, WiMAX, etc.) to effect such communication. In the illustrative embodiment, the communication circuitry 220 includes or is otherwise communicatively coupled to one or more communication interfaces 222. The communication interfaces 222 may be configured to communicatively couple the computing node 110 to any number of other computing nodes 110, the interconnect device 120, networks (e.g., physical or logical networks), and/or external computing devices (e.g., the source computing device 102, the destination computing device 104, other network communication management devices, etc.).

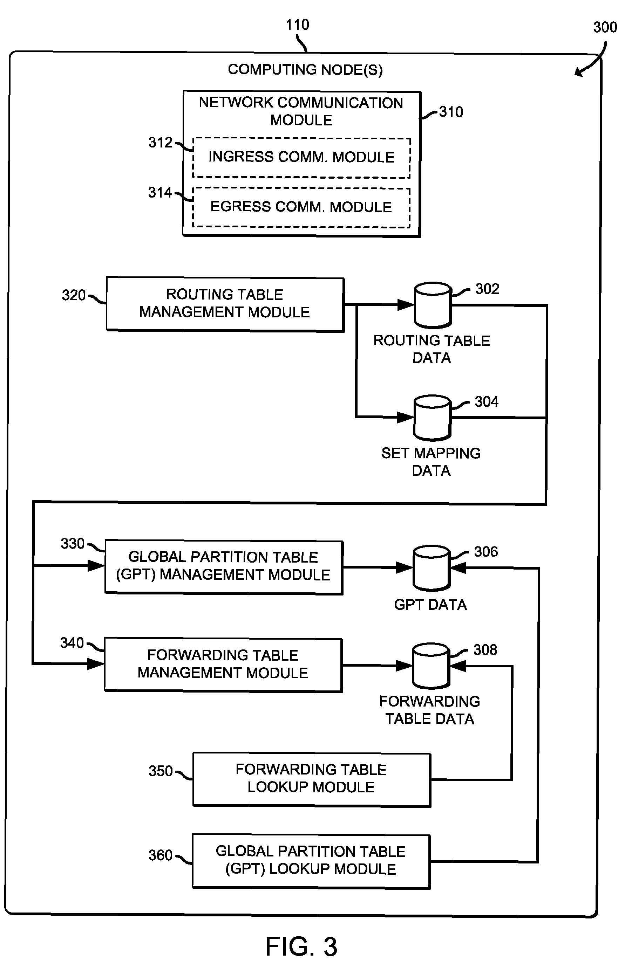

Referring now to FIG. 3, in use, each of the computing nodes 110 establishes an environment 300 during operation. The illustrative environment 300 includes a network communication module 310, a routing table management module 320, a global partition table (GPT) management module 330, a forwarding table management module 340, a forwarding table lookup module 350, and a GPT lookup module 360. Each of the modules, logic, and other components of the environment 300 may be embodied as hardware, software, firmware, or a combination thereof. For example, each of the modules, logic, and other components of the environment 300 may form a portion of, or otherwise be established by, a processor or other hardware components of the computing node 110. As such, in some embodiments, one or more of the modules of the environment 300 may be embodied as a circuit or collection of electrical devices (e.g., a network communication circuit, a routing management circuit, etc.). In the illustrative environment 300, the computing node 110 includes routing table data 302, set mapping data 304, GPT data 306, and forwarding table data 308, each of which may be accessible by one or more of the various modules and/or sub-modules of the computing node 110. It should be appreciated that the computing node 110 may include other components, sub-components, modules, and devices commonly found in a server device, which are not illustrated in FIG. 3 for clarity of the description.

The network communication module 310 is configured to facilitate network communications between the source computing device 102, the interconnect device 120, and the destination computing device 106. Each computing node 110 can be configured for routing and switching purposes. Accordingly, each computing node 110 may receive a network packet 108 from one or more external ports (i.e., communication interfaces 222) and transmit the network packet 108 to another computing node 110 for forwarding to a destination, or egress, port based on flow identification rules. In other words, the network communication module 310 may be configured to behave as both an ingress computing device 112 and/or an egress computing device 118, depending on whether the computing device 110 is receiving the network packet 108 from an external computing device and/or transmitting the network packet to a destination computing device. For example, under certain conditions, such as wherein the computing device 110 receives the network packet 108 and has a portion of the forwarding table 208 that corresponds to the received network packet 108, the computing device may behave as both the ingress computing device 112 and the egress computing device 118.

In some embodiments, the network communication module 310 may include an ingress communication module 312 and/or an egress communication module 314. The ingress communication module 312 is configured to receive network packet(s) 108 from the source computing device 102 (e.g., a network switch, a network router, an originating computing device, etc.) when the computing node 110 is acting as an ingress computing node 112. The received network packet(s) 108 may be embodied as internet protocol (IP) packets including a destination IP address of a target of the received network packet 108. Of course, the received network packet(s) 108 may include other types of information such as, for example, a destination port, a source IP address, a source port, protocol information, and/or a MAC address. It should be appreciated, however, that the received network packet(s) 108 may be embodied as any other type of network packet in other embodiments. In some embodiments, the network packet(s) 108 may be received from an external computing device communicatively coupled to a communication interface 222 of the illustrative computing node 110 of FIG. 2. It should be appreciated that in embodiments wherein the ingress communication module 312 receives the network packet(s) 108 from the external computing device, the computing node 110 may be referred to as the "ingress" computing node 112. The ingress communication module 312 may be further configured to provide an indication to the other computing nodes 110 after an update is performed on any data of the routing table data 302, the set mapping data 304, the GPT data 306, and/or the forwarding table data 308.

The egress communication module 314 is configured to determine an output port and transmit the network packet 108 out of the software cluster switch 104 from the output port to the destination computing device 106 when the computing node 110 is acting as an "egress" computing node 118. That is, the egress communication module 314 is configured to transmit the network packet 108 towards its final destination. For example, in some embodiments, the final destination of the network packet 108 may be an external computing device directly connected to one of the communication interfaces 222 of the egress computing node 118. In another example, in some embodiments, the final destination of the network packet 108 may be an external computing device communicatively coupled to the egress computing node 118 via one or more networks.

The routing table management module 320 is configured to maintain the routing table data 302, which is stored in the routing table 214, and the set mapping data 304, which is stored in the set mapping table 216. To maintain the routing table data 302, the routing table management module 320 is further configured to support construction and modification (e.g., add, delete, and/or modify) of the routing table data 302. In some embodiments, the routing table data 302 may be received by the computing node 110 from an external computing device, such as a network controller. To maintain set mapping data 304, the routing table management module 320 is further configured to support construction and modification (e.g., add, delete, and/or modify) of the set mapping data 304. The set mapping data 304 includes a hash table that includes a number of buckets, wherein each bucket includes one or more entries for storing input keys and their corresponding values. The routing table management module 320 is additionally configured to use a bucket-to-group mapping scheme (i.e., a 2-level hashing of the key) to determine which designated bucket each input key is to be stored in. In some embodiments, the routing table management module 320 is configured to determine a group to which a plurality of buckets is to be assigned. In such embodiments, consecutive blocks of buckets, or key-blocks, may be used to map a larger number of blocks, and an even larger number of entries, to a smaller number of groups.

In some embodiments, the input key may be comprised of at least a portion of a flow identifier of the network packet 108, such as a destination IP address, a destination MAC address, a flow label, a 5-tuple flow identifier (i.e., a source port, a destination port, a source IP address, a destination IP address, and a protocol), for example. Each set of input keys may be placed into a bucket based on a hash function (e.g., a simple uniform hash) that may be applied directly to the input key, the result of which may correspond to a designated bucket in which the input key is to be stored. Accordingly, more than one input key (e.g., sixteen input keys) may be stored in each designated bucket. Additionally, each computing node 110 is assigned a unique identifier, or node index that is used to distinguish each computing node 110 from the other computing nodes 110 of the software cluster switch 104. In some embodiments, the node index may be a binary reference number.

Each entry of the GPT 206 includes a set mapping index that corresponds to the candidate group (i.e., a block of buckets that each include one or more entries) to which the flow identifier has been assigned and a hash function index that corresponds to an index of a hash function of a hash function family that produces a node index (i.e., an index to an egress computing node for that flow identifier) to which the flow identifier corresponds. To determine the hash function index, the routing table management module 320 is further configured to use a brute force computation to determine which hash function from a family of hash functions maps each input key of the group to a small set of output values (i.e., the node indices) without having to store the input keys. In other words, each hash function of the hash function family may be applied to each entry of the group in a predetermined order until the correct node index is returned. Similar to the set mapping index, the hash function index may only need to be a few bits in size, relative to the number of hash functions of the hash function family. As a result of the bucket-to-group mapping scheme, finding suitable hash functions for all of the groups may be more feasible. Further, storing just the indices (i.e., the set mapping index and the hash function index) may result in the GPT 206 being more compact and smaller in size than the routing table 214.

Additionally, when adding an input key to its corresponding bucket and, consequently its corresponding group, the hash function may need to be recalculated for that group and the corresponding GPT data 306 updated (i.e., the hash function index). Accordingly, in some embodiments, the routing table management module 320 may provide a notification to the GPT management module 330 and/or the forwarding table management module 340 that indicates a change to the set mapping data 304 has occurred. In some embodiments, the number of entries in each bucket of the set mapping data 304 may be restricted in size. In other words, the set mapping data 304 may only be able to support the storage of a maximum number of input keys for each bucket. In the event the maximum number of input keys is already present in the corresponding bucket, the particular entry may be ignored. Accordingly, the GPT 206 may still route the network packet 108 to a particular computing node 110 based on the output of the hash function; however, the computing node 110 may not correspond to the egress computing device 118. As a result, the computing node 110 to which the network packet 108 was routed (i.e., a "bounce" or "intermediate" computing node) may then perform a full routing table lookup and transmit the packet to the appropriate egress computing device 118. In other words, an additional hop may be added.

The GPT management module 330, at the control plane, is configured to construct and maintain (i.e., add, delete, modify, etc.) the GPT data 306. In some embodiments, the GPT data 306 may include the GPT 206, which may be generated based on the routing table data 302. In order to avoid reconstruction of the entire GPT data 306, prior knowledge of the total table size prior to initial construction may be required. Accordingly, for some workloads, a rough estimation of total table size may be determined based on various heuristics and/or estimations. Further, in some embodiments (e.g., vEPC), prior knowledge of a range of input keys may be used to construct the table (e.g., the GPT 206 of FIG. 2) for the GPT data 306, which may be updated as necessary. In other embodiments, wherein prior knowledge of the range of input keys cannot be ascertained, a batch construction may be performed as a means for online bootstrapping. Specifically, full duplication of the entire forwarding table (i.e., instead of the GPT 206) may be used in each computing node 110 until enough input keys have been collected, and, upon enough keys having been collected, the table for the GPT data 306 may be constructed based on the collected input keys.

The GPT management module 330 may be further configured to receive a notification (e.g., from the routing table management module 320) that an entry is to be deleted from the GPT data 306. In a vEPC embodiment, for example, the notification may be received from a mobility management entity (MME). In a switch or router embodiment, the local forwarding table 208 may maintain an eviction policy, such as a least recently used (LRU) eviction policy. After the entry has been deleted from the GPT data 306, the GPT management module 330 may provide a notification to the control plane. The GPT management module 330, when updating an entry, may recalculate the hash function for the corresponding group and save the index the new hash function accordingly.

The forwarding table management module 340, at the control plane, is configured to construct a forwarding table (e.g., the forwarding table 208 of FIG. 2) and maintain the forwarding table data 308 of the forwarding table using various add, delete, and modify operations. Accordingly, in some embodiments, the forwarding table data 308 may include the forwarding table 208 (i.e., a portion, or subset, of the entire forwarding table) local to the computing node 110. The forwarding table lookup module 350 may be further configured to provide a notification to the GPT management module 330 to notify the GPT management module 330 to take a corresponding action on the GPT data 306 based on the operation performed in maintaining the forwarding table data 308. For example, if the forwarding table lookup module 350 performs a delete operation to remove a forwarding table entry from the forwarding table data 308, the forwarding table lookup module 350 may provide a notification to the GPT management module 330 that indicates which forwarding table entry has been removed, such that the GPT management module 330 can remove the corresponding entry from the GPT data 306.

The forwarding table lookup module 350, at the data plane, is configured to perform a lookup operation on the forwarding table data 308 to determine forwarding information for the network packet 108. As described previously, each computing node 110 in the software cluster switch 104 may host a portion of forwarding table entries. To determine the allocation of the forwarding table entries for each computing node 110, the entire forwarding table is divided and distributed based on which of the computing nodes 110 is the handling node (i.e., responsible for handling the network packet 108). Accordingly, each of the computing nodes 110 receives only a portion of the forwarding table entries of the forwarding table data 308 that that computing node 110 is responsible for processing and transmitting. As such, the forwarding table 208 local to the computing node 110 may only include those forwarding entries that correspond to that particular computing device 110.

The GPT lookup module 360, at the data plane, is configured to perform a lookup operation on the GPT data 306 to determine which computing node 110 is the handling node (i.e., the egress computing node). To do so, the GPT lookup module 360 may be configured to apply a hash function to a flow identifier (e.g., a destination IP address, a destination MAC address, a 5-tuple flow identifier, etc.) of the network packet 108 to determine a bucket (i.e., one or more entries of the GPT table 206) in which the flow identifier entry is stored. The GPT lookup module 360 may return a value (i.e., index) that corresponds to the handling node (i.e., the egress computing node 118) in response to performing the lookup operation on the GPT data 306.

Under certain conditions, such as when the number of entries presently in the GPT table 206 exceeds a maximum number of allowable entries of the GPT table 206, a cost associated with searching for a hash function for the flow identifier entry may exceed a predetermined cost threshold. Under such conditions, the GPT lookup module 360 may route the network packet 108 based on an output of a hash function, that may not be the correct hash function, to another computing node 110, even if that computing node 110 is not the handling node. Accordingly, if the computing node 110 receiving the routed network packet 108 is not the handling node, that non-handling node may perform a full lookup on the routing table and transmit the network packet 108 to the handling node, resulting in an additional hop. In some embodiments, the GPT lookup module 360 may be further configured to provide an indication to the egress communication module 314 that indicates which final output port corresponds to the destination IP address of the network packet 108.

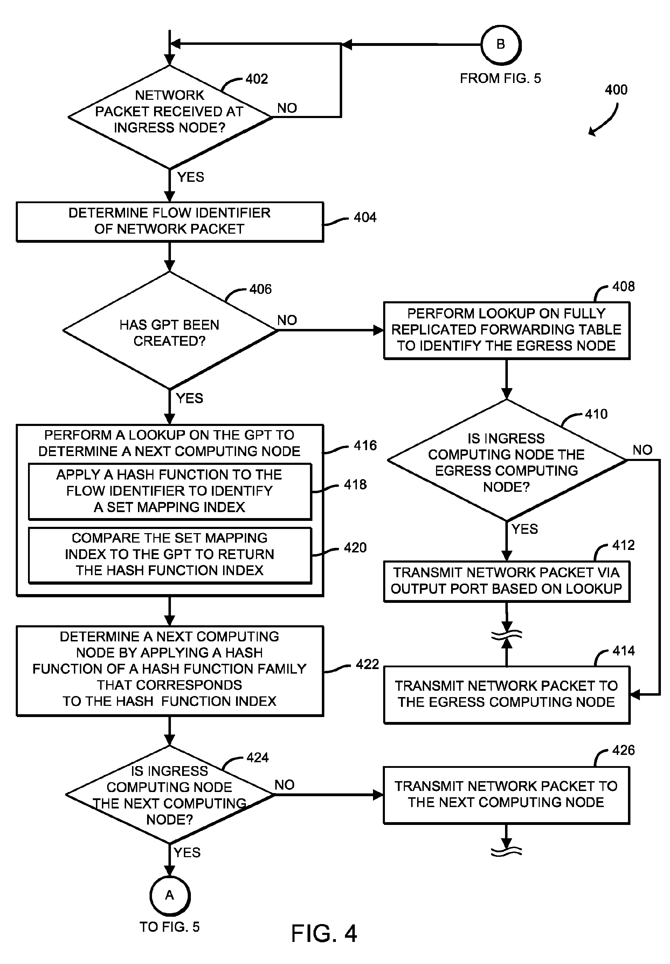

Referring now to FIG. 4, in use, a computing node 110 (e.g., the ingress computing node 112 of FIG. 1) may execute a method 400 for determining an egress computing node (e.g., the egress computing node 118) for a received network packet (e.g., the network packet 108). As noted previously, any of the computing nodes 110 may act as an ingress computing node 112. The method 400 begins with block 402 in which the ingress computing node 112 determines whether a network packet 108 is received, such as from a source computing device 102. To do so, the ingress computing node 112 may monitor the communication interface(s) 222 for the receipt of a new network packet 108. If the ingress computing node 112 determines that a new network packet 108 has not been received, the method 400 loops back to block 402 and the ingress computing node 112 continues monitoring for receipt of a new network packet 108. However, if the ingress computing node 112 determines that a new network packet 108 has been received, the method 400 advances to block 404.

At block 404, the ingress computing node 112 determines a flow identifier of the network packet 108. In some embodiments, the flow identifier may be an address and/or port of a target computing device (e.g., the destination computing device 106) communicatively coupled to one of the computing nodes 110 of the software cluster switch 104, or a destination computing device (e.g., the destination computing device 106) communicatively coupled to the software cluster switch 104 via one or more networks and/or networking devices. In an embodiment, the received network packet 108 may be embodied as an internet protocol (IP) packet including, among other types of information, a destination IP address of a target of the received network packet 108. In such embodiments, the ingress computing node 112 may examine (i.e., parse) an IP header of the received IP network packet 108 to determine an IP address and/or port of the source computing device (i.e., a source address and/or port), an IP address and/or port of the target computing device (i.e., a destination address and/or port), and/or a protocol.

At block 406, the ingress computing node 112 determines whether the GPT 206 has been created. As described previously, in some embodiments, a minimum number of input keys may be required to construct the GPT 206. Accordingly, in such embodiments wherein the GPT has not yet been created, at block 408, the ingress computing node 112 performs a lookup on a fully replicated forwarding table (i.e., the entire forwarding table, not the local partition of the entire forwarding table) to identify the egress computing node 118. Otherwise, the method 400 advances to block 416 to perform a lookup operation that is described in further detail below. From block 408, the method 400 advances to block 410, wherein the ingress computing node 112 determines whether the ingress computing node 112 is the same computing node as the egress computing node 118 identified in the lookup at block 408. In other words, the ingress computing node 112 determines whether the ingress computing node 112 is also the egress computing node 118. If so, the method 400 advances to block 412, in which the ingress computing node 112 transmits the network packet 108 via an output port of the ingress computing node 112 based on the lookup performed at block 408. If the ingress computing node 112 determined the egress computing node 118 was a computing node other than the ingress computing node 112, the method 400 advances to block 414, wherein the ingress computing node 112 transmits the network packet 108 to the egress computing node 118 determined at block 408.

As described previously, if the ingress computing node 112 determined the number of input keys presently collected is less than the minimum number of input keys required to construct the GPT 206, the method advances to block 416. At block 416, the ingress computing node 112 performs a lookup on the GPT using a set mapping index as a key and retrieves the hash function index (i.e., the value of the key value pair that whose key matches the set mapping index) as a result of the lookup. To do so, at block 418, the ingress computing node 112 applies a hash function (e.g., a simple uniform hash) to the flow identifier to identify the set mapping index. Further, at block 418, the ingress computing node 112 compares the set mapping index to the GPT 206 to determine the index of the hash function (i.e., the hash function index).

It should be appreciated that the lookup on the GPT can return a set mapping index of the GPT 206 that does not correspond to the egress computing node 118. For example, in an embodiment wherein the GPT 206 is full (i.e., cannot support additional flows), if a flow identifier is received that is not represented by the GPT 206, the GPT 206 lookup may return a hash function index that does not correspond to the flow identifier on which the GPT 206 lookup was performed. Accordingly, the lookup operation performed at block 416 may result in a computing node that is not the egress computing node 118, but rather a "bounce" computing node, or an "intermediate" computing node.

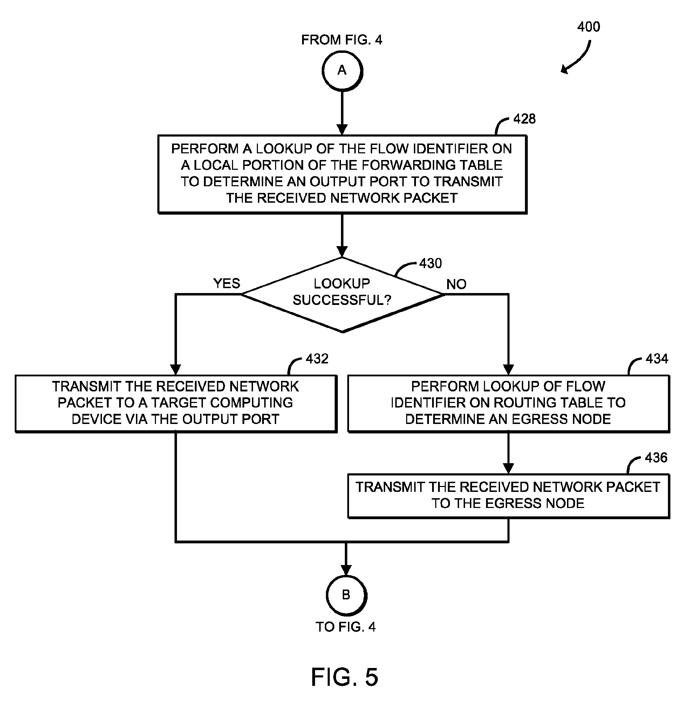

At block 424, the ingress computing node 112 determines whether the ingress computing node 112 is the same computing node as the next computing node 118 determined at block 422. If the ingress computing node 112 is not the same computing node as the next computing node 118, the method 400 advances to block 426, wherein the ingress computing node 112 transmits the network packet 108 to the next computing node. If the ingress computing node 112 is the same computing node as the next computing node, the method 400 advances to block 428, as shown in FIG. 5, wherein the ingress computing node 112 performs a lookup of the flow identifier on a local portion of a forwarding table (e.g., the forwarding table 208) to determine an output port of the ingress computing node 112 from which to transmit the received network packet.

At block 430, the ingress computing node 112 determines whether the lookup operation performed at block 416 was successful. If the lookup performed at block 416 was successful, the method 400 advances to block 432, wherein the ingress computing node 112 transmits the network packet 108 to a target computing device (e.g., the destination computing device 106) via the output port of the ingress computing node 112 determined by the lookup operation. If the lookup operation was not successful, the method 400 advances to block 434, wherein the ingress computing node 112 performs a lookup of the flow identifier on a routing table (e.g., the routing table 214) to determine an egress computing node 118. At block 436, the ingress computing node 112 transmits the received network packet to the egress computing node 118 determined at block 434.

It should be appreciated that, in some embodiments, the flow identifier used in the lookup operations at blocks 408, 424, and 428 may be different flow identifiers and/or portions of the same flow identifier. For example, in some embodiment the lookup operations performed at blocks 408 and 424 may use the IP address of the target computing device, whereas the lookup operation performed at block 428 may use the 5-tuple flow identifier.

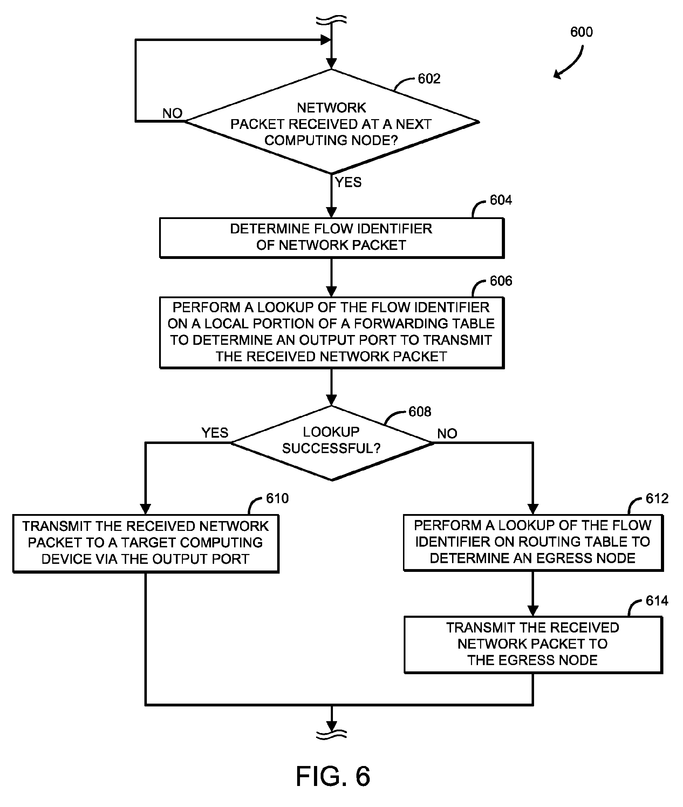

Referring now to FIG. 6, in use, a computing node 110 (e.g., the computing node 114, the computing node 116, or the egress computing node 118 of FIG. 1) may execute a method 600 for forwarding a network packet (e.g., the network packet 108) received from an ingress node. The method 600 begins with block 602 in which the egress computing node 118 determines whether a network packet 108 is received at the next computing node, such as from the ingress computing node 112. To do so, the next computing node may monitor the communication interface(s) 222 for the receipt of a network packet 108.

As described previously, an ingress computing node 112 may perform a lookup operation on the GPT 206, which can result in the ingress computing node 112 transmitting the network packet to the next computing node, unaware of whether the next computing node is an egress computing node 118 or a bounce computing node. Accordingly, in some embodiments, an indication may be provided within (e.g., in a packer or message header) or accompanying the network packet received at block 602 that indicates whether the network packet was transmitted from the ingress node 112 (i.e., has already been compared to the GPT 206).

If the next computing node determines that a network packet 108 has not been received, the method 600 loops back to block 602 and the next computing node continues monitoring for receipt of a network packet 108. However, if the next computing node determines that a network packet 108 has been received, the method 600 advances to block 604, wherein the next computing node determines a flow identifier of the network packet 108. In some embodiments, the flow identifier may be an address and/or port of a target computing device (e.g., the destination computing device 106) communicatively coupled to one of the computing nodes 110 of the software cluster switch 104, or a destination computing device (e.g., the destination computing device 106) communicatively coupled to the software cluster switch 104 via one or more networks and/or networking devices. In an embodiment, the received network packet 108 may be embodied as an internet protocol (IP) packet including, among other types of information, a destination IP address of a target of the received network packet 108. In such embodiments, the next computing node may examine (i.e., parse) an IP header of the received IP network packet 108 to determine an IP address and/or port of the target computing device, an IP address and/or port of the source computing device, and/or a protocol.

At block 606, the next computing node performs a lookup of the flow identifier on a local portion of the forwarding table (e.g., the forwarding table 208) to determine an output port of the next computing node. At block 608, the egress computing node 118 determines whether the lookup performed at block 606 was successful. In other words, the next computing node determines whether it is the egress computing node 118 from which to transmit the received network packet. If the lookup performed at block 606 was successful (i.e., the next computing node is the egress computing node 118), the method 600 advances to block 610, wherein the next computing node, as the egress computing node 118, transmits the network packet 108 to a target computing device (e.g., the destination computing device 106) via the output port of the next computing node determined by the lookup performed at block 606. If the lookup performed at block 606 was not successful (i.e., the next computing node is actually a "bounce" or "intermediate" node), the method 600 advances to block 612, wherein the next computing node performs a lookup of the flow identifier on a routing table (e.g., the routing table 214) to determine the egress computing node 118. At block 614, the next computing node transmits the received network packet to the egress computing node 118 determined at block 612.

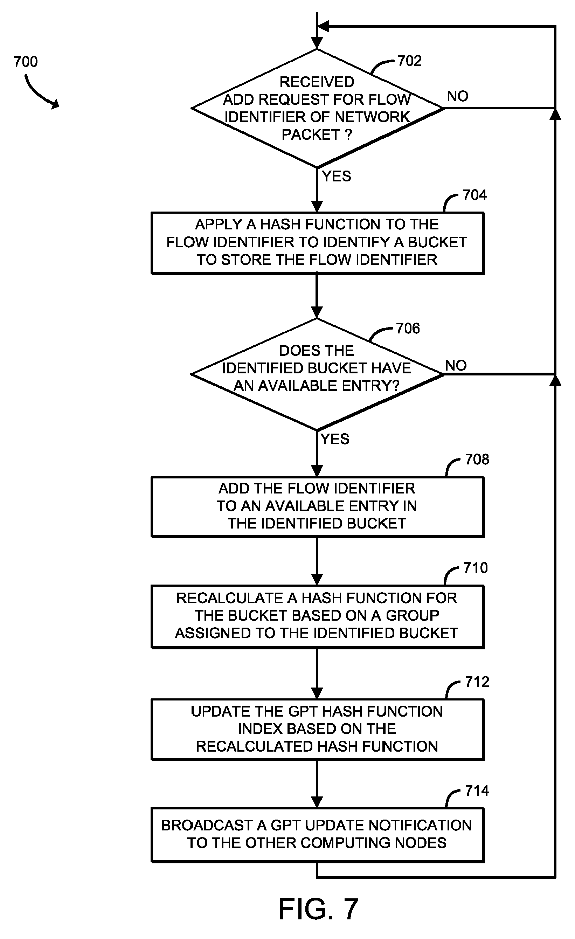

Referring now to FIG. 7, a computing node 110 may execute a method 700 for adding an entry corresponding to a network flow identifier of a network packet (e.g., the network packet 108) to a routing table (e.g., the routing table 214) of the computing node 110. The method 700 begins with block 702 in which the computing node 110 determines whether a request to add an entry (i.e., a flow identifier) to the routing table 214 is received at the computing node 110. If the computing node 110 determines that a request has not been received, the method 700 loops back to block 702, wherein the computing node 110 continues monitoring for receipt of an add entry request. However, if the computing node 110 determines that an add entry request has been received, the method 700 advances to block 704.

At block 704, the computing node 110 applies a hash function to the flow identifier to identify a bucket of a hash table (e.g., the set mapping data 304) in which the flow identifier may be stored. At block 706, the computing node 110 determines whether the identified bucket has an available entry to store the flow identifier. If not, the method 700 loops back to block 702 and the computing node 110 continues monitoring for receipt of an add entry request. If the identified bucket is determined to have an available entry, the method 700 advances to block 708, wherein the computing node 110 adds the flow identifier to an available entry in the identified bucket. At block 710, the computing node 110 recalculates the hash function based on a group (i.e., a block of buckets that each include one or more entries for storing flow identifiers) previously assigned to the identified bucket. In other words, the computing device 110 recalculates the hash function for each entry in each bucket that has been assigned the same group. As described previously, recalculating the hash function may be comprised of applying each of a number of hash functions of a hash function family until a result of which is returned that is equal to a node index that corresponds to the handling node, or egress computing node, for the network packet 108.

At block 712, the computing node 110 updates the GPT 206 based on the recalculated hash function. In other words, the computing node 110 updates the appropriate hash function index for the bucket identified at block 704. At block 714, the computing node 110 broadcasts a GPT update notification to the other computing nodes 110 that indicates to update their respective GPTs based on the updated GPT performed at block 712.

### EXAMPLES

Illustrative examples of the devices, systems, and methods disclosed herein are provided below. An embodiment of the devices, systems, and methods may include any one or more, and any combination of, the examples described below.

Example 1 includes a computing node of a software cluster switch for modular forwarding table scalability, the computing node comprising a routing table management module to manage a set mapping table that includes a plurality of buckets, wherein each bucket includes one or more entries to store flow identifiers that correspond to network packets received by the computing node, wherein each bucket is assigned to a group, and wherein each group includes more than one bucket; a global partition table management module to manage a global partition table (GPT) that includes a plurality of entries usable to determine a node identifier of a next computing node of the software cluster switch; a GPT lookup module to, in response to receiving a network packet, perform a lookup on the GPT to determine the next computing node for the network packet based on a flow identifier of the network packet and apply the second hash function to the flow identifier to generate a node identifier that identifies the next computing node, wherein to perform the lookup on the GPT comprises to (i) apply a first hash function to the flow identifier to generate a set mapping index that identifies a group of the set mapping table, (ii) compare the set mapping index to the GPT to determine a second hash function, and wherein the next computing node comprises one of a bounce computing node or an egress computing node; and a network communication module to transmit the network packet to the next computing node.

Example 2 includes the subject matter of Example 1, and wherein the network communication module is further to receive a network packet from another computing node, and wherein the network communication module is further to determine whether the network packet from the other computing node includes an indication that the other computing node is one of an ingress computing node or a bounce node.

Example 3 includes the subject matter of any of Examples 1 and 2, and further including a forwarding table management module to perform, in response to a determination that the other computing node is a bounce node, a lookup of the flow identifier at a local portion of a forwarding table to determine an output port of the computing node, wherein the local portion of the forwarding table includes a subset of forwarding table entries based on output ports of the computing node.

Example 4 includes the subject matter of any of Examples 1-3, and wherein the network communication module is further to transmit the network packet to a target computing device via the output port in response to a determination that the lookup of the flow identifier at the local portion of the forwarding table was successful.

Example 5 includes the subject matter of any of Examples 1-4, and further including a forwarding table management module to perform, in response to a determination that the other computing node is an egress node, a lookup of the flow identifier at a local portion of a forwarding table to determine an output port of the computing node, wherein the local portion of the forwarding table includes a subset of forwarding table entries based on output ports of the computing node; and a routing table lookup module to perform, in response to a determination that the lookup of the flow identifier at the local portion of the forwarding table was not successful, a lookup of the flow identifier at a routing table to determine the egress computing node, wherein the routing table identifies the egress computing node for the flow identifier; and wherein the network communication module is further to transmit the network packet to the egress computing node.

Example 6 includes the subject matter of any of Examples 1-5, and wherein to compare the set mapping index to the GPT to determine the second hash function comprises to (i) perform a lookup on the entries of the GPT as a function of the set mapping index and (ii) retrieve a hash function index that identifies a hash function of a hash function family as a result of the lookup, wherein the hash function family comprises a plurality of hash functions.

Example 7 includes the subject matter of any of Examples 1-6, and further including a routing table management module to (i) receive a request to add the flow identifier of the network packet to a routing table of the computing node, (ii) add the flow identifier to the routing table of the computing node in response to having received the request, (iii) apply a hash function to the flow identifier to identify a bucket of the set mapping table to store the flow identifier, (iv) add the flow identifier to an entry in the bucket, (v) assign a group to the entry, and (vi) update the hash function index that corresponds to the group assigned to the entry in the GPT.

Example 8 includes the subject matter of any of Examples 1-7, and wherein the routing table management module is further to broadcast an update notification to other computing nodes of the software cluster switch, wherein the update notification provides an indication of the update to the GPT.

Example 9 includes the subject matter of any of Examples 1-8, and wherein to update the hash function index comprises to identify a hash function from the hash function family that results in an output that corresponds to a node index of the egress computing node for the network packet.

Example 10 includes the subject matter of any of Examples 1-9, and wherein to identify the hash function from the hash function family comprises to apply each hash function of the hash function family to each entry of the set mapping table assigned to the same group as the flow identifier until an applied hash function results in an output that corresponds to a node index that corresponds to the egress computing node for each of the entries of the set mapping table assigned to the same group as the flow identifier.

Example 11 includes the subject matter of any of Examples 1-10, and wherein to determine the flow identifier of the network packet comprises to determine a destination address included in the received network packet that is indicative of a target of the received network packet.

Example 12 includes the subject matter of any of Examples 1-11, and wherein to determine the flow identifier of the network packet comprises to determine a 5-tuple flow identifier included in the received network packet that is indicative of a target of the received network packet.

Example 13 includes the subject matter of any of Examples 1-12, and wherein to determine the node identifier corresponding to the egress computing node of the software cluster switch comprises to determine an egress computing node that is identified as the computing node of the software cluster switch that stores the subset of the forwarding table entries based on having an output port that maps to the flow identifier.

Example 14 includes a method for modular forwarding table scalability of a software cluster switch, the method comprising managing, by a computing node, a set mapping table that includes a plurality of buckets, wherein each bucket includes one or more entries to store flow identifiers that correspond to network packets received by the computing node, wherein each bucket is assigned to a group, and wherein each group includes more than one bucket; managing, by the computing node, a global partition table (GPT) that includes a plurality of entries usable to determine a node identifier of a next computing node of the software cluster switch; performing, by the computing node and in response to receiving a network packet, a lookup on the GPT to determine the next computing node for the network packet based on a flow identifier of the network packet, wherein performing the lookup on the GPT comprises (i) applying a first hash function to the flow identifier to generate a set mapping index that identifies a group of the set mapping table and (ii) comparing the set mapping index to the GPT to determine a second hash function; applying the second hash function to the flow identifier to generate a node identifier that identifies the next computing node, and wherein the next computing node comprises one of a bounce computing node or an egress computing node; and transmitting, by the computing node, the network packet to the next computing node.

Example 15 includes the subject matter of Example 14, and further including receiving, by the computing node, a network packet from another computing node; and determining, by the computing node, whether the network packet from the other computing node includes an indication that the other computing node is one of an ingress computing node or a bounce node.

Example 16 includes the subject matter of any of Examples 14 and 15, and further including performing, by the computing node and in response to a determination that the other computing node is a bounce node, a lookup of the flow identifier at a local portion of a forwarding table to determine an output port of the computing node, wherein the local portion of the forwarding table includes a subset of forwarding table entries based on output ports of the computing node.

Example 17 includes the subject matter of any of Examples 14-16, and further including transmitting, by the computing node, the network packet to a target computing device via the output port in response to a determination that the lookup of the flow identifier at the local portion of the forwarding table was successful.

Example 18 includes the subject matter of any of Examples 14-17, and further including performing, by the computing node and in response to a determination that the other computing node is an egress node, a lookup of the flow identifier at a local portion of a forwarding table to determine an output port of the computing node, wherein the local portion of the forwarding table includes a subset of forwarding table entries based on output ports of the computing node; and performing, by the computing node and in response to a determination that the lookup of the flow identifier at the local portion of the forwarding table was not successful, a lookup of the flow identifier at a routing table to determine the egress computing node, wherein the routing table identifies the egress computing node for the flow identifier; and transmitting the network packet to the egress computing node.

Example 19 includes the subject matter of any of Examples 14-18, and wherein comparing the set mapping index to the GPT to determine the second hash function comprises (i) performing a lookup on the entries of the GPT as a function of the set mapping index and (ii) retrieving a hash function index that identifies a hash function of a hash function family as a result of the lookup, wherein the hash function family comprises a plurality of hash functions.

Example 20 includes the subject matter of any of Examples 14-19, and further including receiving a request to add the flow identifier of the network packet to a routing table of the computing node; adding the flow identifier to the routing table of the computing node in response to having received the request; applying a hash function to the flow identifier to identify a bucket of the set mapping table to store the flow identifier; adding the flow identifier to an entry in the bucket; assigning a group to the entry; and updating the hash function index that corresponds to the group assigned to the entry in the GPT.

Example 21 includes the subject matter of any of Examples 14-20, and further including broadcasting an update notification to other computing nodes of the software cluster switch, wherein the update notification provides an indication of the update to the GPT.

Example 22 includes the subject matter of any of Examples 14-21, and wherein updating the hash function index comprises identifying a hash function from the hash function family that results in an output that corresponds to a node index of the egress computing node for the network packet.

Example 23 includes the subject matter of any of Examples 14-22, and wherein identifying the hash function from the hash function family comprises applying each of the hash functions of the hash function family to each entry of the set mapping table assigned to the same group as the flow identifier until an applied hash function results in an output that corresponds to a node index that corresponds to the egress computing node for each of the entries of the set mapping table assigned to the same group as the flow identifier.

Example 24 includes the subject matter of any of Examples 14-23, and wherein determining the flow identifier of the network packet comprises determining a destination address included in the received network packet that is indicative of a target of the received network packet.

Example 25 includes the subject matter of any of Examples 14-24, and wherein determining the flow identifier of the network packet comprises determining a 5-tuple flow identifier included in the received network packet that is indicative of a target of the received network packet.

Example 26 includes the subject matter of any of Examples 14-25, and wherein determining the node identifier corresponding to the egress computing node of the software cluster switch comprises determining an egress computing node that is identified as the computing node of the software cluster switch that stores the subset of the forwarding table entries based on having an output port that maps to the flow identifier.

Example 27 includes a computing node comprising a processor; and a memory having stored therein a plurality of instructions that when executed by the processor cause the computing node to perform the method of any of Examples 14-26.

Example 28 includes one or more machine readable storage media comprising a plurality of instructions stored thereon that in response to being executed result in a computing node performing the method of any of Examples 14-26.

Example 29 includes a computing node of a software cluster switch for modular forwarding table scalability, the computing node comprising means for managing a set mapping table that includes a plurality of buckets, wherein each bucket includes one or more entries to store flow identifiers that correspond to network packets received by the computing node, wherein each bucket is assigned to a group, and wherein each group includes more than one bucket; means for managing a global partition table (GPT) that includes a plurality of entries usable to determine a node identifier of a next computing node of the software cluster switch; means for performing, in response to receiving a network packet, a lookup on the GPT to determine the next computing node for the network packet based on a flow identifier of the network packet, wherein the means for performing the lookup on the GPT comprises means for (i) applying a first hash function to the flow identifier to generate a set mapping index that identifies a group of the set mapping table and (ii) comparing the set mapping index to the GPT to determine a second hash function; means for applying the second hash function to the flow identifier to generate a node identifier that identifies the next computing node, and wherein the next computing node comprises one of a bounce computing node or an egress computing node; and means for transmitting the network packet to the next computing node.

Example 30 includes the subject matter of Example 29, and further including means for receiving a network packet from another computing node; and means for determining whether the network packet from the other computing node includes an indication that the other computing node is one of an ingress computing node or a bounce node.

Example 31 includes the subject matter of any of Examples 29 and 30, and further including means for performing, in response to a determination that the other computing node is a bounce node, a lookup of the flow identifier at a local portion of a forwarding table to determine an output port of the computing node, wherein the local portion of the forwarding table includes a subset of forwarding table entries based on output ports of the computing node.

Example 32 includes the subject matter of any of Examples 29-31, and further including means for transmitting the network packet to a target computing device via the output port in response to a determination that the lookup of the flow identifier at the local portion of the forwarding table was successful.

Example 33 includes the subject matter of any of Examples 29-32, and further including means for performing, and in response to a determination that the other computing node is an egress node, a lookup of the flow identifier at a local portion of a forwarding table to determine an output port of the computing node, wherein the local portion of the forwarding table includes a subset of forwarding table entries based on output ports of the computing node; and means for performing, in response to a determination that the lookup of the flow identifier at the local portion of the forwarding table was not successful, a lookup of the flow identifier at a routing table to determine the egress computing node, wherein the routing table identifies the egress computing node for the flow identifier; and means for transmitting the network packet to the egress computing node.

Example 34 includes the subject matter of any of Examples 29-33, and wherein the means for comparing the set mapping index to the GPT to determine the second hash function comprises means for (i) performing a lookup on the entries of the GPT as a function of the set mapping index and (ii) retrieving a hash function index that identifies a hash function of a hash function family as a result of the lookup, wherein the hash function family comprises a plurality of hash functions.

Example 35 includes the subject matter of any of Examples 29-34, and further including means for receiving a request to add the flow identifier of the network packet to a routing table of the computing node; means for adding the flow identifier to the routing table of the computing node in response to having received the request; means for applying a hash function to the flow identifier to identify a bucket of the set mapping table to store the flow identifier; means for adding the flow identifier to an entry in the bucket; means for assigning a group to the entry; and means for updating the hash function index that corresponds to the group assigned to the entry in the GPT.

Example 36 includes the subject matter of any of Examples 29-35, and further including means for broadcasting an update notification to other computing nodes of the software cluster switch, wherein the update notification provides an indication of the update to the GPT.

Example 37 includes the subject matter of any of Examples 29-36, and wherein the means for updating the hash function index comprises means for identifying a hash function from the hash function family that results in an output that corresponds to a node index of the egress computing node for the network packet.

Example 38 includes the subject matter of any of Examples 29-37, and wherein the means for identifying the hash function from the hash function family comprises means for applying each of the hash functions of the hash function family to each entry of the set mapping table assigned to the same group as the flow identifier until an applied hash function results in an output that corresponds to a node index that corresponds to the egress computing node for each of the entries of the set mapping table assigned to the same group as the flow identifier.

Example 39 includes the subject matter of any of Examples 29-38, and wherein the means for determining the flow identifier of the network packet comprises means for determining a destination address included in the received network packet that is indicative of a target of the received network packet.

Example 40 includes the subject matter of any of Examples 29-39, and wherein the means for determining the flow identifier of the network packet comprises means for determining a 5-tuple flow identifier included in the received network packet that is indicative of a target of the received network packet.

Example 41 includes the subject matter of any of Examples 29-40, and wherein the means for determining the node identifier corresponding to the egress computing node of the software cluster switch comprises means for determining an egress computing node that is identified as the computing node of the software cluster switch that stores the subset of the forwarding table entries based on having an output port that maps to the flow identifier.

## Claims

1. A computing node of a software cluster switch for modular forwarding table scalability, the computing node comprising:
a routing table management module to manage a set mapping table that includes a plurality of buckets, wherein each bucket includes one or more entries to store flow identifiers that correspond to network packets received by the computing node, wherein each bucket is assigned to a group, and wherein each group includes more than one bucket;
a global partition table management module to manage a global partition table (GPT) that includes a plurality of entries usable to determine a node identifier of a next computing node of the software cluster switch;
a GPT lookup module to, in response to receiving a network packet, perform a lookup on the GPT to determine the next computing node for the network packet based on a flow identifier of the network packet and apply the second hash function to the flow identifier to generate a node identifier that identifies the next computing node, wherein to perform the lookup on the GPT comprises to (i) apply a first hash function to the flow identifier to generate a set mapping index that identifies a group of the set mapping table, (ii) compare the set mapping index to the GPT to determine a second hash function, and wherein the next computing node comprises one of a bounce computing node or an egress computing node; and
a network communication module to transmit the network packet to the next computing node.

2. The computing node of claim 1, wherein the network communication module is further to receive a network packet from another computing node, and wherein the network communication module is further to determine whether the network packet from the other computing node includes an indication that the other computing node is one of an ingress computing node or a bounce node.

3. The computing node of claim 2, further comprising a forwarding table management module to perform, in response to a determination that the other computing node is a bounce node, a lookup of the flow identifier at a local portion of a forwarding table to determine an output port of the computing node, wherein the local portion of the forwarding table includes a subset of forwarding table entries based on output ports of the computing node.

4. The computing node of claim 3, wherein the network communication module is further to transmit the network packet to a target computing device via the output port in response to a determination that the lookup of the flow identifier at the local portion of the forwarding table was successful.

5. The computing node of claim 1, further comprising:
a forwarding table management module to perform, in response to a determination that the other computing node is an egress node, a lookup of the flow identifier at a local portion of a forwarding table to determine an output port of the computing node, wherein the local portion of the forwarding table includes a subset of forwarding table entries based on output ports of the computing node; and
a routing table lookup module to perform, in response to a determination that the lookup of the flow identifier at the local portion of the forwarding table was not successful, a lookup of the flow identifier at a routing table to determine the egress computing node, wherein the routing table identifies the egress computing node for the flow identifier; and
wherein the network communication module is further to transmit the network packet to the egress computing node.

6. The computing node of claim 1, wherein to compare the set mapping index to the GPT to determine the second hash function comprises to (i) perform a lookup on the entries of the GPT as a function of the set mapping index and (ii) retrieve a hash function index that identifies a hash function of a hash function family as a result of the lookup, wherein the hash function family comprises a plurality of hash functions.

7. The computing node of claim 6, further comprising:
a routing table management module to (i) receive a request to add the flow identifier of the network packet to a routing table of the computing node, (ii) add the flow identifier to the routing table of the computing node in response to having received the request, (iii) apply a hash function to the flow identifier to identify a bucket of the set mapping table to store the flow identifier, (iv) add the flow identifier to an entry in the bucket, (v) assign a group to the entry, and (vi) update the hash function index that corresponds to the group assigned to the entry in the GPT.

8. The computing node of claim 7, wherein the routing table management module is further to broadcast an update notification to other computing nodes of the software cluster switch, wherein the update notification provides an indication of the update to the GPT.

9. The computing node of claim 7, wherein to update the hash function index comprises to identify a hash function from the hash function family that results in an output that corresponds to a node index of the egress computing node for the network packet.

10. The computing node of claim 9, wherein to identify the hash function from the hash function family comprises to apply each hash function of the hash function family to each entry of the set mapping table assigned to the same group as the flow identifier until an applied hash function results in an output that corresponds to a node index that corresponds to the egress computing node for each of the entries of the set mapping table assigned to the same group as the flow identifier.

11. The computing node of claim 1, wherein to determine the node identifier corresponding to the egress computing node of the software cluster switch comprises to determine an egress computing node that is identified as the computing node of the software cluster switch that stores the subset of the forwarding table entries based on having an output port that maps to the flow identifier.

12. A method for modular forwarding table scalability of a software cluster switch, the method comprising:
managing, by a computing node, a set mapping table that includes a plurality of buckets, wherein each bucket includes one or more entries to store flow identifiers that correspond to network packets received by the computing node, wherein each bucket is assigned to a group, and wherein each group includes more than one bucket;
managing, by the computing node, a global partition table (GPT) that includes a plurality of entries usable to determine a node identifier of a next computing node of the software cluster switch;
performing, by the computing node and in response to receiving a network packet, a lookup on the GPT to determine the next computing node for the network packet based on a flow identifier of the network packet, wherein performing the lookup on the GPT comprises (i) applying a first hash function to the flow identifier to generate a set mapping index that identifies a group of the set mapping table and (ii) comparing the set mapping index to the GPT to determine a second hash function;
applying the second hash function to the flow identifier to generate a node identifier that identifies the next computing node, and wherein the next computing node comprises one of a bounce computing node or an egress computing node; and
transmitting, by the computing node, the network packet to the next computing node.

13. The method of claim 12, further comprising:
receiving, by the computing node, a network packet from another computing node; and
determining, by the computing node, whether the network packet from the other computing node includes an indication that the other computing node is one of an ingress computing node or a bounce node.

14. The method of claim 12, further comprising:
receiving a request to add the flow identifier of the network packet to a routing table of the computing node;
adding the flow identifier to the routing table of the computing node in response to having received the request;
applying a hash function to the flow identifier to identify a bucket of the set mapping table to store the flow identifier;
adding the flow identifier to an entry in the bucket;
assigning a group to the entry; and
updating a hash function index that corresponds to the group assigned to the entry in the GPT, wherein the hash function index that identifies a hash function of a hash function family, wherein the hash function family comprises a plurality of hash functions.

15. One or more machine readable storage media comprising a plurality of instructions stored thereon that in response to being executed result in a computing node performing the method of any of claims 12-14.
